# EUROPÄISCHE PATENTANMELDUNG

(11) **EP 1 008 390 A1**
(43) Veröffentlichungstag der Anmeldung: **14.06.2000**
(21) Anmeldenummer: 99122731.5
(22) Anmeldetag: 16.11.1999
(51) Int. Cl.: B03C 3/28

(54) **Einrichtung zur Reinigung der Luft von Pollenstaub und dergleichen**

(30) Priorität: 08.12.1998 DE 19856490
(71) Anmelder: Firma Carl Freudenberg, 69469 Weinheim (DE)
(72) Erfinder: Friedrich, Rolf, 68519 Viernheim (DE); Tapper, Renate, 67059 Ludwigshafen (DE); Buchwald, Holger, 69502 Hemsbach (DE); Morweiser, Karl-Heinz, 69488 Birkenau (DE)

(57) **Zusammenfassung**

Es wird eine Einrichtung zur Reinigung der Luft von Pollenstaub und dergleichen vorgeschlagen, miteinem Luftfilter aus einem Vliesstoff aus Kunststoffasern mit elektrostatischer Wirksamkeit mit feinsten Poren zur Abscheidung von Staubpartikeln und dergleichen mit einer Partikelgröße von unterhalb 1µm als vorgefertigtes Flächenfilter, das ohne oder mit einem Rahmen (2) unter Verwendung von an den Filterrändern (3) anbringbaren Befestigungsmitteln (4) in eine bestehende Gebäudeöffnung wie Fenster oder Türen als Pollenstaubfilter einsetzbar ist.

## Beschreibung

### Technisches Gebiet

Die Erfindung befaßt sich mit der Reinigung der Luft von Pollenstaub und dergleichen.

### Stand der Technik

Allergien gegen Pollen und Blütenstaub sind weit verbreitet. Um dem entgegenzuwirken, wird ein hoher medizinischer Aufwand getrieben. Häufig hilft den betroffenen Personen jedoch nur ein Wohnortwechsel während der Pollensaison, zum Beispiel ein Aufenthalt am Meer, um der sehr lästigen Allergie zu entgehen.

### Darstellung der Erfindung

Der Erfindung liegt die Aufgabe zugrunde, wenigstens in einem begrenzten Bereich, wie Gebäuden, Häusern, insbesondere Krankenhäusern, Abhilfe zu schaffen. Die Lösung der gestellten Aufgabe wird bei einer Einrichtung zur Reinigung der Luft von Pollenstaub und dergleichen dadurch erreicht, daß ein Luftfilter aus einem Vliesstoff aus Kunststoffasern mit elektrostatischer Wirksamkeit mit feinsten Porungen zur Abscheidung von Staubpartikeln und dergleichen mit einer Partikelgröße von unterhalb 1 µm als vorgefertigtes Flächenfilter, das ohne oder mit einem Rahmen unter Verwendung von an den Filterrändern anbringbaren Befestigungsmitteln in eine bestehende Gebäudeöffnung wie Fenster oder Türen als Pollenstaubfilter einsetzbar ist, ausgebildet wird. Durch das Abschließen der Gebäudeöffnungen mit einem solchen Filter wird eine sehr einfache, jedoch hochwirksame Lösung zum Abfiltern von Pollen beim Eindringen der Luft in das Gebäude erreicht. Auf diese Weise können beispielsweise auch während der Pollensaison die Fenster geöffnet werden und, wenn sie mit einem entsprechenden Filter versehen sind, kann zwar Frischluft in die Räumlichkeiten eintreten, jedoch werden die Pollen herausgefiltert. Darüberhinaus hat ein solches Filter den Vorteil, daß es die Lichtzufuhr nur unwesentlich einschränkt.

Als Luftfiltermaterial kann beispielsweise ein Material verwendet werden, wie es in der DS PS 44 07 344 beschrieben ist. Wesentlich ist dabei, daß es sich um ein Luftfiltermaterial mit elektrostatischer Wirksamkeit handelt, damit die Pollen, die ebenfalls elektrostatische Ladungsträger sind, am Filter haften bleiben.

Das Filtermaterial wird so ausgewählt, daß es eine hohe Luftdurchlässigkeit bei geringstem Fasereinsatz und höchstem Abscheidegrad hat.

Um insbesondere bei größeren Gebäudeöffnungen und gegebenenfalls stärkerem Luftdruck ein stabiles Filter zu erreichen, kann das Filter aus einem Vliesstoff als Filtermedium mit einem Gelege als Verstärkungslage ausgebildet sein.

Grundsätzlich ist es möglich, das Flächenfilter auf die Größe oder Kontur der Öffnung zuzuschneiden und über Befestigungsmittel am Rahmen der Öffnung anzubringen. Als Befestigungsmittel können hier doppelseitige Klebebänder eingesetzt werden. Eine gute Befestigungsmöglichkeit besteht auch darin, wenn Klettbänder am Rahmen der Öffnung und an den Filterrändern angebracht werden und das Luftfilter mit Hilfe dieser Klettbänder befestigt wird. Die Klettbänder haben den besonderen Vorteil, daß das Luftfilter beliebig oft eingesetzt oder abgenommen werden kann.

Eine weitere Befestigungsart kann dadurch erreicht werden, daß als Befestigungsmittel Klemmschienen benutzt werden, in welche die Filterränder eingeklemmt werden und die, mit einem Klebe- oder Klettband versehen, das Filter am Rahmen der Gebäudeöffnung festhalten. Über diese Klemmschienen wird dem Gesamtfilter eine zusätzliche hohe Stabilität erteilt.

Möglich ist auch eine Befestigung, bei der als Befestigungsmittel ein in die Gebäudeöffnung passender Rahmen benutzt wird, an dem das Filter angeschlagen ist. Ein solcher Rahmen kann beispielsweise in Anlehnung an an sich bekannte, aus Draht oder Kunststoffgitter bestehende Fliegengitter hergestellt sein. Über Druckknöpfe oder auch Klemmfedern kann dieser Rahmen in die Fensteröffnung eingesetzt werden.

Der erfindungsgemäße Luftfilter kann als vorgefertigter Filter mit den entsprechenden DIN-Maßen von Fenstern, Türen und dergleichen hergestellt sein. Die erforderlichen Befestigungsmittel sind dann bereits an den Filterrändern angebracht. Im Hinblick darauf, daß Gebäudeöffnungen sehr unterschiedlich in ihrer Größe und Form sein können, ist jedoch vorgesehen, jeweils einen Filter und die zugehörigen Befestigungsmittel zu einer Baueinheit baukastenartig zum Selbsteinbau zusammenzufassen. Der Luftfilter kann dann vom Käufer selbst auf die erforderliche Größe zugeschnitten, mit den Befestigungsmitteln versehen und in die Öffnung eingesetzt werden.

### Ausführung der Erfindung

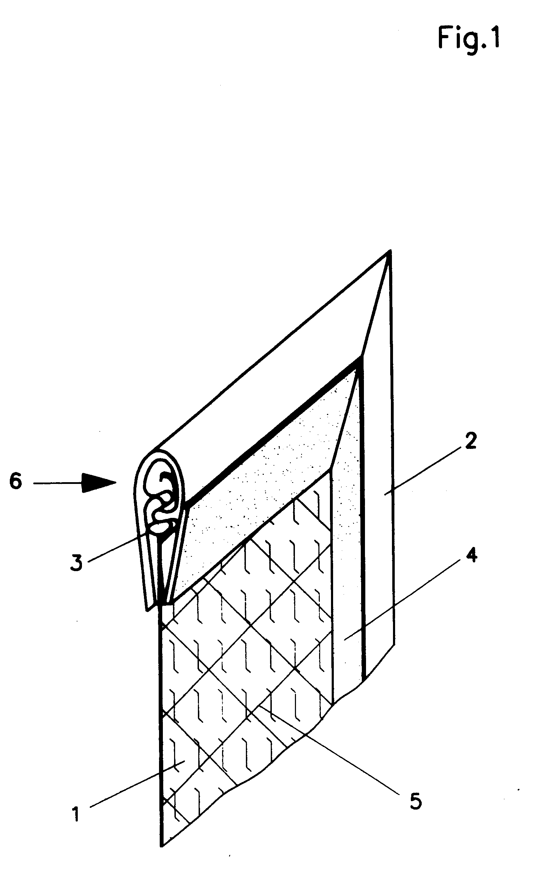

In der beiliegenden Zeichnung ist ein Ausführungsbeispiel gezeigt:

Es wird ein Luftfilter verwendet, das aus einem Vliesstoff aus Kunststoffasern mit elektrostatischer Wirksamkeit und feinsten Poren besteht. Die Luftdurchlässigkeit des Filters liegt über 2500 Liter/m²s bei 2 mbar, ermittelt in Anlehnung an DIN 53857-75. Dabei wurde eine sehr hohe Partikelabscheidung erreicht. Der Trenngrad lag über 95% bei einer Partikelgröße von über 1 µm, ermittelt bei einer Durchströmgeschwindigkeit von V=0,28m/s in Anlehnung an DIN 71460-1. Ein Durchtritt von Pollen durch ein solches Filter ist praktisch ausgeschlossen.

## Patentansprüche

1. Einrichtung zur Reinigung der Luft von Pollenstaub und dergleichen, gekennzeichnet durch einen Luftfilter aus einem Vliesstoff aus Kunststoffasern mit elektrostatischer Wirksamkeit mit feinsten Poren zur Abscheidung von Staubpartikeln und dergleichen mit einer Partikelgröße von unterhalb 1 µm als vorgefertigtes Flächenfilter, das ohne oder mit einem Rahmen (2) unter Verwendung von an den Filterrändern (3) anbringbaren Befestigungsmitteln (4) in eine bestehende Gebäudeöffnung wie Fenster oder Türen als Pollenstaubfilter einsetzbar ist.

2. Einrichtung nach Anspruch 1, dadurch gekennzeichnet, daß das Filter (1) aus einem Vliesstoff als Filtermedium und einem Gelege (5) als Verstärkungslage gebildet ist.

3. Einrichtung nach Anspruch 1 oder 2, dadurch gekennzeichnet, daß als Befestigungsmittel ein doppelseitiges Klebeband eingesetzt wird.

4. Einrichtung nach Anspruch 1 oder 2, dadurch gekennzeichnet, daß als Befestigungsmittel am Öffnungsrahmen und an den Filterrändern (3) angebrachte Klettbänder verwendet werden.

5. Einrichtung nach Anspruch 1 und 2, dadurch gekennzeichnet, daß als Befestigungsmittel Klemmschienen (6) benutzt werden, in welche die Filterrränder (3) eingeklemmt werden und die mit einem Klebe- oder Klettband (4) versehen das Filter (1) am Rahmen der Gebäudeöffnung festhalten.

6. Einrichtung nach Anspruch 1 oder 2, dadurch gekennzeichnet, daß als Befestigungsmittel ein in die Gebäudeöffnung passender Rahmen benutzt wird, an dem das Filter (1) angeschlagen ist.

7. Einrichtung nach einem der Ansprüche 1 bis 6, dadurch gekennzeichnet, daß das Filter (1) eine hohe Luftdurchlässigkeit bei geringstem Fasereinsatz und höchstem Abscheidegrad hat.

8. Einrichtung nach einem der Ansprüche 1 bis 7, dadurch gekennzeichnet, daß jeweils ein Filter (1) und die zugehörigen Befestigungsmittel (2, 4, 6) zu einer Baueinheit baukastenartig zum Selbsteinbau zusammengefaßt sind.
